# EUROPEAN PATENT APPLICATION

(11) **EP 4 592 775 A1**
(43) Date of publication of application: **30.07.2025**
(21) Application number: 24305136.4
(22) Date of filing: 25.01.2024
(51) Int. Cl.: G05B 19/042

(54) **METHOD OF CONTROLLING AN INDUSTRIAL MACHINE**

(71) Applicant: SCHNEIDER ELECTRIC INDUSTRIES SAS, 92500 Rueil-Malmaison (FR)
(72) Inventor: FURTH, Sebastian, 97950 Grossrinderfeld (DE)
(74) Representative: Manitz Finsterwald Patent- und Rechtsanwaltspartnerschaft mbB

(57) **Abstract**

The invention relates to a method of controlling an industrial machine, the industrial machine comprising a control unit, e.g. a PLC, and at least one actuator and/or sensor which is controlled by the control unit, wherein
- a Language Model is provided,
- a Language Model Interface is provided,
- a Context Information Library is provided, which stores information on the industrial machine, particularly commands executable by the industrial machine, wherein
- the Language Model Interface provides information on the industrial machine from the Context Information Library to the Language Model,
- the Language Model sends commands to be executed by the industrial machine to the Language Model Interface,
- the Language Model Interface translates the commands received from the Language Model into machine commands for the control unit.

## Description

The present invention relates to a method of controlling an industrial machine, the industrial machine comprises a control unit, e.g. a PLC, and at least one actuator and/or one sensor which is controlled by the control unit.

Industrial machines are used in a great variety of applications, e.g. for sorting, packaging, filling or manufacturing goods. Usually the industrial machine is programmed by an engineer who will have to repeatedly revise the programming in order to achieve an optimized working of the industrial machine.

This programming and optimization of the programming of the industrial machine can be time-consuming.

It is therefore the object of the present invention to provide a method for controlling an industrial machine which reduces the time required for putting the industrial machine to work and/or for optimizing the work of the industrial machine.

This object is satisfied by a method in accordance with claim 1.

The method of claim 1 relates to controlling an industrial machine, the industrial machine comprises a control unit, e.g. a PLC, and at least one actuator and/or sensor which is controlled by the control unit, wherein
- a Language Model is provided,
- a Language Model Interface is provided,
- a Context Information Library is provided, which stores information on the industrial machine, particularly commands executable by the industrial machine, wherein
- the Language Model Interface provides information on the industrial machine from the Context Information Library to the Language Model,
- the Language Model sends commands to be executed by the industrial machine to the Language Model Interface,
- the Language Model Interface translates the commands received from the Language Model into machine commands for the control unit.

The invention is based on the idea to leverage the problem-solving capabilities of the Language Model to automatically generate instructions, i.e. the machine commands, to operate the industrial machine in a desired manner. The machine commands can e.g. comprise code (e.g. source code and/or executable code) and/or can comprise commands that are executable by the industrial machine.

By providing the Language Model with information on the industrial machine from the Context Information Library, the Language Model is aware of the working principles and setup of the industrial machine and can therefore gain some kind of "understanding" of the industrial machine. Preferably, the Language Model is given a task and/or requirement to be fulfilled, wherein the Language Model then uses its knowledge on the industrial machine to provide e.g. a sequence of commands to be executed by the industrial machine. These commands, which can be integrated in a human language text, are sent to the Language Model Interface, wherein the Language Model Interface translates the commands received from the Language Model into machine commands for the control unit.

Advantageously, by using the inventive method, machine commands for the control unit can be produced automatically within very short time, wherein the machine commands are specific to achieve the results desired by the operator.

The Language Model can comprise an artificial intelligence, particularly a pre-trained artificial intelligence. The Language Model can be preferably a generative Language Model. The Language Model can be a publicly available Language Model. By employing a pre-trained and/or publicly available Language Model, it is advantageous that no training of the artificial intelligence needs to be performed for controlling the industrial machine. As mentioned before, the Language Model already provides problem solving capabilities and can e.g. also provide memory capabilities that allow storing the information on the industrial machine from the Context Information Library, wherein the Language Model then possesses all necessary information and skills to produce the commands to be executed by the industrial machine.

The control unit can comprise one or more PLCs (programmable logic controllers) controlling the actuators and sensors of the industrial machine. Correspondingly the industrial machine can comprise a plurality of actuators, e.g. motors, pumps and the like and/or sensors, e.g. temperature sensors, magnetic sensors, optical sensors, etc., wherein the control unit and the actuators and/or sensors can be connected via field busses (e.g. Sercos, EtherCAT, EIP, etc.).

The Language Model, the Language Model Interface and/or the Context Information Library can be stored and/or executed on a supervising unit. The supervising unit can be a computer connected via a data link to the industrial machine. The supervising unit can also be part of the control unit.

Preferably, the Language Model Interface is connected to the control unit using a data connection, e.g. ethernet and/or a field bus. After receiving the machine commands from the Language Model Interface the control unit can execute these machine commands using the actuator and/or sensor of the industrial machine.

The control unit can e.g. comprise only one PLC or a plurality of PLCs. If a plurality of PLCs is present, the same Language Model Interface can be used for more than one or all of the PLCs. Alternatively, a different Language Model Interface can be used for each of the PLCs. Each different Language Model Interface can be adapted for the specific PLC and can for example comprise interfaces that match with those of the corresponding PLC.

The commands sent by the Language Model and/or the machine components can comprise library functions and/or programming functions that can be used by the control unit, as will be shown in more detail below.

Advantageous embodiments of the invention are disclosed in the description, the figures and the dependent claims.

According to one embodiment, the Language Model and the Language Model Interface exchange information in human language. The exchange of information between the Language Model and the Language Model Interface can be in electronic form, e.g. using a data bus or a data storage device, wherein the electronically exchanged information e.g. comprises text in human language. The exchanged information can e.g. be in English, German or any other human language. In other words, the exchanged information can preferably be understood by a human and/or is preferably semantically and syntactically correct. The exchange of information in human language at least is performed in the direction from the Language Model Interface to the Language Model. Preferably, the exchange of information in human language is performed both ways, i.e. also from the Language Model to the Language Model Interface. As an advantage, the information on the industrial machine already existing in human language can thus be taken over into the Context Information Library and does not have to be adapted.

Using human language for the communication with the Language Model allows to leverage the full potential of the Language Model, as Language Models are specifically adapted to process input based in human language and to output information in human language.

According to another embodiment the Language Model comprises a Large Language Model, particularly a publicly available Large Language Model, wherein the Large Language Model preferably is adapted for contextual understanding and/or comprises knowledge representation capabilities. A Large Language Model can be based on deep learning techniques and can internally have a large number of parameters, preferably more than 10 million, further preferably more than 100 million.

It is emphasized that neither the Language Model, nor the Large Language Model have to be specifically trained for controlling the industrial machine. Rather, an off-the-shelf Language Model or Large Language Model can be used. For example, AutoGPT can be employed, wherein AutoGPT uses GPT of the company *OpenAl* to autonomously complete tasks and/or requirements of a user. Since the general problem-solving capabilities of the Language Model or the Large Language Model are sufficiently high, no specific training for controlling the industrial machine is necessary.

Particularly, the Language Model and/or the Large Language Model can have the following capabilities, wherein the Large Language Model preferably differs from the Language Model in the number of internal parameters (the internal parameters of the Large Language Model can be tenfold or 100-fold higher than those of the Language Model).

The following statements on the Language Model also apply on the Large Language Model.

The Language Model can have a contextual understanding. Language models excel at understanding context. The Language Model can be adapted to process and/or comprehend complex information, such as details about mechanics, electrics, available functions to execute on the control unit, and the industrial machine's application and target requirements. The Language Model can therefore be adapted to generate plans that align with the specific requirements and/or constraints of the industrial machine.

The Language Model can have knowledge representation capabilities. The Language Model can be adapted to store and recall (vast amounts of) information, allowing the Language Model to access relevant data about the industrial machine, its components, and the desired outcomes. The Language Model can be adapted to leverage the knowledge in formulating plans that optimize performance and achieve the tasks and/or requirements received by the operator.

Furthermore, the Language Model can have sequence generation capabilities. The Language Model can be adapted to generate coherent and/or meaningful sequences of actions and/or instructions (i.e. commands to be executed by the industrial machine). E.g. given the information from the Context Information Library, which can comprise functions executable by the industrial machine, i.e. the context information, the Language Model can generate a plan that outlines a sequence of actions to control the industrial machine. The Language Model can for this purpose be adapted to consider dependencies, timing and/or specific requirements for each step of the sequence.

The Language Model can also comprise problem solving and/or optimization capabilities. In other words, the Language Model can comprise problem solving abilities to propose optimized plans. The Language Model can be adapted to analyze the context information and/or the given task and/or requirement to be fulfilled and can then suggest actions and/or strategies that e.g. maximize efficiency, minimize energy consumption, reduce downtime and/or achieve other desired objectives. The Language Model can be adapted to weigh different options and propose the most suitable course of action.

The Language Model can be configured to adapt to new situations and to learn from feedback. As will be later described in more detail, the Language Model can incorporate (real-time) feedback data and adjust its strategies accordingly as it generates plans and controls the industrial machine. This adaptability can enable the Language Model to continuously improve its plans and performance over time, ensuring optimal control and responsiveness to changing conditions.

According to a further embodiment the Language Model receives an input from an operator, the input comprising a task and/or requirement to be fulfilled by the industrial machine, wherein the input is preferably in human language. The input therefore may set a goal for the Language Model, wherein the Language Model can then use e.g. the information on the industrial machine from the Context Information Library (i.e. the context information) to provide commands to be executed by the industrial machine which fulfill the task and/or requirement. For example, in a package sorting application the task could simply be: "Sort all packages weighing more than 5 kg to exit 1 and all packages equal or less to 5 kg to exit 2". The context information could then comprise information on the conveyor belts of the industrial machine, of the position of the weight sensors and library functions executable by the control unit. Furthermore, the context information can comprise information about the mechanical structure of the industrial machine. Based on this input information, the Language Model can then output commands to be executed by the industrial machine which fulfill the given task.

In another example, the operator could simply ask the Language Model to: "Achieve the maximum throughput", e.g. for a tube filling application. This example is detailed further below.

In accordance with another embodiment the input from the operator is supplemented, preferably by the Language Model Interface, by including information on the industrial machine from the Context Information Library. Further preferably, when supplementing the input from the operator, a set of functions executable by the control unit is (added to the included information and thus) presented to the Language Model.

For example, the input from the operator could be:
"*The overall target to achieve is: Achieve the maximum throughput for a tube filling application."*

The tube filling application can be carried out on a multicarrier system having different carriers that can be moved independently from each other along a track, wherein the multicarrier system comprises several stations at which e.g. a placement or a filling of tubes can be performed. This information on the multicarrier system can be comprised in the Context Information Library, wherein the Language Model Interface can then e.g. provide the following prompt to the Language Model:
"The overall target to achieve is: Achieve the maximum throughput for a tube filling application.

The application shall be realized with the Lexium MC12 multi-carrier offer.

The Lexium MC12 is a multi-carrier system that consists of a linear motor, a carriage, and a magnetic track.

The linear motor is responsible for generating the motion of the carriage, which moves along the magnetic track.

The carriage can be equipped with different types of carriers, such as trays, pallets, or fixtures, depending on the application requirements.

The system can be integrated with Schneider Electric's PacDrive 3 motion controllers to provide a complete automation solution.

The PacDrive 3 controllers offer advanced features such as motion control, logic control, and robotics control.

The multi-carrier application will have 4 stations: load empty tubes, fill tubes, close tubes, unload filled tubes.

Time for loading and unloading is 700ms.

Acceleration and Velocity: maximum that is possible.

The complete track has a length of 6544mm.

Possible positions of carriers on the track are within (0, 6544) with a 1mm precision.

Now, let's dive into the details of the application:
The track is described by the track_description_string "SSSSSSSCCSSCCSSSSSSSCCSSCC", which consists of a combination of straight sections (S) and curved sections (C).

The application includes different entities, starting with the carriers. Twelve carrier positions are defined along the track, with specific distances from the starting point: [1750, 1600, 1450, 1300, 1150, 1000, 850, 700, 550, 400, 250, 50].

The application also includes several generic stations:
The first generic station is located at position 2060 on the track. When the carriers reach this station, they are required to wait for a duration of 0.680 seconds before further actions can be performed. A minimum of four carriers is needed to trigger the stations actions. Upon completing the station's actions, the carrier state is set to 1.

The second generic station is positioned at 3800 on the track. Carriers arriving at this station must wait for 0.550 seconds before proceeding. Similar to the previous station, four carriers are required, and upon completion, the carrier state is set to 2. The third generic station is located at 5600 on the track. Carriers reaching this station are required to wait for 2.0 seconds. However, in this case, a minimum of twelve carriers is needed. Upon completion, the carrier state is set to 3.

The fourth and final generic station is positioned at 1500 on the track. Carriers arriving at this station must wait for 0.680 seconds before continuing. Four carriers are required, and upon completion, the carrier state is set back to 0.

There are the following library functions available that can be used by the LLM interface to interact with the Multi-Carrier System (this information could also be provided by the LLM interface component):
class OPCMultiCarrierTrack
func _init_
func _init_carriers
func _init_stations
func connect
func disconnect
func init_carrier_parameters
func init_carrier_positions
func get_next_carrier_behind_pos
func get_carrier_positions
func get_carrier_front_gaps
func get_front_gap
func get_station_observations
func apply_station_actions_group_command
func get_action_mask
func send_carriers_to_initial_station
func move_carrier
func move_carriers
func move_carriers_by_id
func reset_carriers
func get_track_length
func get_carrier_at_position
class OPCStation
func _init_
func _init_carrier_standing_positions
func _apply_action
func apply_action_optimized
func _step_carriers_wait
func _step_carriers_constant_speed_start
func _step_carriers_constant_speed_stop
func _step_carrier_clamp_start
func _step_carrier_clamp_stop
func _step_carrier_unclamp_start
func get_next_free_standing_position
func get_observation
func get_carriers_in_station
func get_carriers_in_station_constant_speed
func get_carrier_in_station
func get_carriers_processed
func _get_carriers_state
class OPCCarrier
func _init_
func connect
func unsubscribe
func subscribe_to_data
func set_parameters
func move
func reset"

As can be seen, the context information included in the prompt comprises structural information on the multicarrier, e.g. straight and curved sections, the mechanical position of the stations, and a list of functions executable by the control unit.

The functions preferably have self-explanatory names. As the Language Model can also be adapted to understand programming code, e.g. a source code, the Language Model can employ the functions given to satisfy the proposed task. For example the function move_carrier can be understood by the Language Model that this function can be used to move a carrier to a specific position along the track.

Also, the prompt (i.e. the information on the industrial machine and the task) can also comprise technical documentation on the industrial machine which may disclose details on the industrial machine and the functions that can be used to control the industrial machine. For the sake of briefness, the examples given herein omit the parts of the prompt reciting the technical documentation.

The input from the operator can be supplemented by a task specifying section. The task specifying section may include ordering the Language Model to consider the provided context information and/or to output detailed instructions on how to use the provided functions. It can also comprise a request for the Language Model to provide the output in a given structure, the structure e.g. comprising "Thoughts", "Reasoning", "Plan", "Criticism", "Speak".

The task specifying section can e.g. be preprogrammed and/or fixed. For the above example, the task specifying section can read as follows and can be appended to the above given prompt:
"Now please perform the Plan Generation step.

Please carefully consider the provided context information.

Please make sure to express the plan by providing detailed instructions on how to use the provided functions.

Please express the plan by referring to the functions, application description, overall requirements, etc. that are described in the context information.

Make sure that your plan provides actual values for target positions, velocity, acceleration, waiting/processing time etc.

The overall output should be in the following format:
THOUGHTS:
REASONING:
PLAN:
CRITICISM:
SPEAK:"

After receiving the input from the operator and preferably the supplemented input, the Language Model considers the complete input and produces an output based on the tasks laid out in the input. The output can comprise the commands to be executed by the industrial machine. The output can be sent to the Language Model Interface.

Particularly, the output can comprise different sections, namely Thoughts, Reasoning, Plan, Criticism and/or Speak. The Thoughts section can comprise an overall summarization of the task to be performed. The Reasoning section can comprise the main aim identified by the Language Model along which the plan is developed. The Plan section can comprise the commands to be executed by the industrial machine, preferably included in a text in human language. The Criticism section can comprise information on how the plan could be further improved. Finally, the Speak section can comprise overall information on the plan and how to best implement the plan.

For the above given example, the output generated by the Language Model can be as follows:
"THOUGHTS: Based on the provided requirements and the available library functions, the plan should focus on optimizing the throughput for the tube filling application using the Lexium MC12 multi-carrier system. We need to consider the specific actions and parameters for each station to ensure smooth operation.
REASONING: To achieve maximum throughput, we should aim to minimize idle time and optimize carrier movement between stations. This can be done by carefully coordinating carrier positions, velocities, and actions at each station.

### PLAN:

Initialize the OPCMultiCarrierTrack and OPCStation objects using the provided functions.

Connect to the multi-carrier system using the connect function. Set carrier parameters and positions using the init_carrier_parameters and init_carrier_positions functions.

Send carriers to the initial station using the send_carriers_to_initial_station function.

Move carriers to the load empty tubes station (position: 2060) using the move_carriers function with a velocity of 2000 mm/s and an acceleration of 20000 mm/s^2.

Wait for 680 ms for loading the tubes using the carrier_process_actions.wait function.

Move carriers to the fill tubes station (position: 3800) using the move_carriers function with a velocity of 2000 mm/s and an acceleration of 20000 mm/s^2.

Wait for 550 ms for filling the tubes using the carrier_process_actions.wait function.

Move carriers to the close tubes station (position: 5600) using the move_carriers function with a velocity of 1500 mm/s and an acceleration of 20000 mm/s^2.

Wait for 2000 ms for closing the tubes using the carrier_process_actions.wait function.

Move carriers to the unload filled tubes station (position: 1500) using the move_carriers function with a velocity of 1700 mm/s and an acceleration of 20000 mm/s^2.

Wait for 680 ms for unloading the filled tubes using the carrier_process_actions.wait function.

Repeat steps 5-12 until the desired number of cycles or time duration is achieved.

This plan takes into account the specific positions, durations, velocities, and accelerations required for each action. It aims to optimize the throughput of the tube filling application while considering the capabilities of the multi-carrier system. Feel free to ask if you have any more questions!

CRITICISM: The plan could be further improved by considering factors such as collision avoidance, optimizing velocities and accelerations for smoother movements, and incorporating error handling and recovery mechanisms in case of failures or interruptions.

SPEAK: This plan focuses on achieving maximum throughput for the tube filling application using the Lexium MC12 multi-carrier system. It involves initializing the necessary objects, connecting to the system, setting carrier parameters and positions, and executing a series of movements and wait actions at specific stations. The plan should be implemented while considering factors like collision avoidance, smooth movements, and error handling.

### Extracted Procedure

1. Initialize the OPCMultiCarrierTrack and OPCStation objects:
   a. OPCMultiCarrierTrack = initialize_OPCMultiCarrierTrack()
   b. OPCStation = initialize_OPCStation()
2. Connect to the multi-carrier system:
   a. connect_to_multi_carrier_system(OPCMultiCarrierTrack)
3. Set carrier parameters and positions:
   a. init_carrier_parameters(OPCMultiCarrierTrack)
   b. init_carrier_positions(OPCMultiCarrierTrack)
4. Send carriers to the initial station:
   a. send_carriers_to_initial_station(OPCMultiCarrierTrack)
5. Move carriers to the load empty tubes station:
   a. move_carriers(OPCMultiCarrierTrack, position=2060, velocity=2000, acceleration=20000)
6. Wait for 680 ms for loading the tubes:
   a. carrier_process_actions.wait(680)
7. Move carriers to the fill tubes station:
   a. move_carriers(OPCMultiCarrierTrack, position=3800, velocity=2000, acceleration=20000)
8. Wait for 550 ms for filling the tubes:
   a. carrier_process_actions.wait(550)
9. Move carriers to the close tubes station:
   a. move_carriers(OPCMultiCarrierTrack, position=5600, velocity=1500, acceleration=20000)
10. Wait for 2000 ms for closing the tubes:
   a. carrier_process_actions.wait(2000)
11. Move carriers to the unload filled tubes station:
   a. move_carriers(OPCMultiCarrierTrack, position=1500, velocity=2000, acceleration=20000)
12. Wait for 680 ms for unloading the filled tubes:
   a. carrier_process_actions.wait(680)
13. Repeat steps 5-12 until the desired number of cycles or time duration is achieved."

The complete output can be received by the Language Model Interface.

According to a further embodiment, for translating the commands received from the Language Model, the Language Model Interface extracts functions executable by the control unit from the received commands. In other words, the Language Model Interface translates the output (and particularly the commands to be executed by the industrial machine included in the plan section) into a format that is executable by the control unit and thereby by the industrial machine. Particularly, from the plan section, i.e. the commands received from the Language Model, the Language Model Interface extracts functions executable by the control unit from the received commands. In the above referenced example, the plan section makes the use of different of the provided functions, e.g. move_carriers, carrier_process_actions . weight or send_carriers_to_initial_station.

According to a further embodiment extracting functions executable by the control unit comprises at least one of the following:
- tokenization,
- part-of-speech tagging,
- named entity recognition,
- syntax parsing,
- lemmatization,
- sequence alignment,
- information extraction,
- language generation,
- error handling.

The above-mentioned steps can be used to extract the functions from the human language text comprised in the plan section.

For tokenization, the Language Model Interface can be adapted to break the original text (of the output) into individual tokens, e.g. words, punctuation, etc. to analyze their structure and relationships.

For part-of-speech tagging, the Language Model Interface can be adapted to assign grammatical tags to each token to determine their syntactic roles, e.g., noun, verb, adjective, and identify function names, parameters, and other relevant information.

For named entity recognition, the Language Model Interface can be adapted to identify specific entities in the text, such as function names, e.g., initialize_OPCMultiCarrierTrack, and variable names, e.g., OPCMultiCarrierTrack, to understand their significance and context.

For syntax parsing, the Language Model Interface can be adapted to analyze the grammatical structure of sentences to identify the relationships between words and phrases. This allows for a better understanding of the sequence of function calls and their dependencies.

For lemmatization, the Language Model Interface can be adapted to reduce words to their base forms, i.e. letters, to handle variations like tense, plurality, and conjugation, improving the accuracy of word matching and comprehension.

For sequence alignment, the Language Model Interface can be adapted to compare the original text with the extracted sequence to align the corresponding steps and identify any deviations and/or missing information.

For information extraction, the Language Model Interface can be adapted to extract key information from the original text, such as function names, parameters, positions, velocities and/or accelerations, and map them to the corresponding function calls in the extracted sequence.

For language generation, the Language Model Interface can be adapted to generate a translated version of the extracted sequence using the identified function names, parameters, and other relevant information to ensure clarity and coherence in the translated output.

For error handling, the Language Model Interface can be adapted to identify any errors or inconsistencies in the extracted sequence and provide appropriate feedback or suggestions to improve the translation accuracy.

Thereby, the Language Model Interface can provide the control unit with a sequence of function calls and/or programming code (e.g. a source code and/or executable code) which can lead the control unit to execute the commands generated by the Language Model.

An example of a sequence of function calls as provided by the Language Model Interface to the control unit is represented as Pseude-Code below:

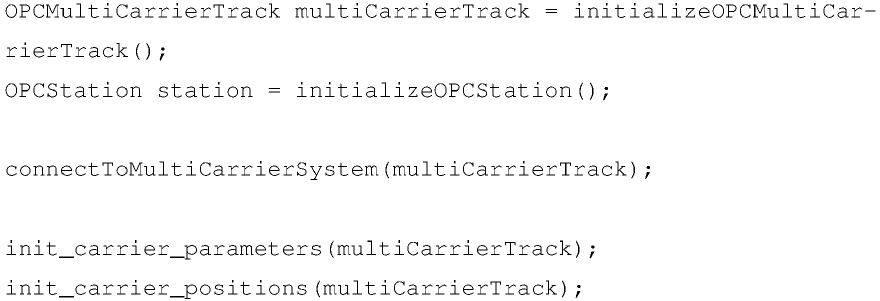

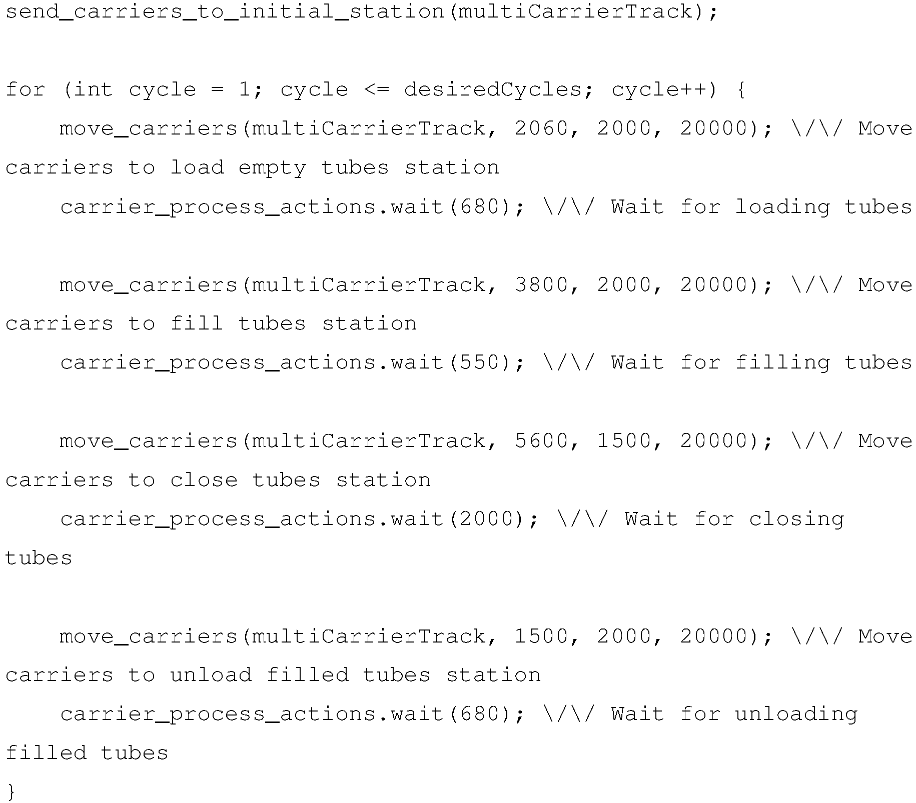

The Language Model Interface can also be adapted to directly control the control unit by sending direct commands to the control unit.

According to a further embodiment the Language Model Interface and the control unit communicate using OPC UA. The OPC unified architecture (OPC UA) is a cross-platform open-source, IEC62541 standard for data exchange developed by the OPC foundation.

By using OPC UA, the industrial machine could describe itself in a semantic way, i.e. variables and functions exposed by the OPC UA Server can have a well-defined semantics, especially, if they follow companion specifications (they describe how OPC UA should be implemented to serve certain target applications in specific domains). Consequently, the Language Model and/or the Language Model Interface can benefit additionally from all the context that can be derived from the semantic descriptions provided by using OPC UA.

To put it short, OPC UA allows to have a clear semantic that can be leveraged to augment the Context Information Library. Additional context can be "pulled" in from textual descriptions if the OPC UA implementation on the control unit.

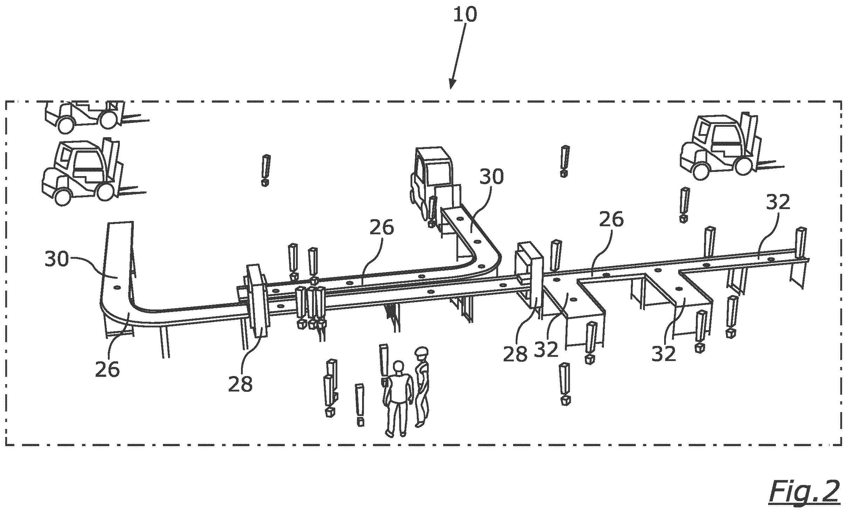

In a different example (similar but not identical to the example of Fig. 2, below), the industrial machine can comprise a conveyor belt system. In this example, the input from the operator could be:
"*I want to have boxes of the color stored for Gate 1 sorted out at Gate 1, boxes of the color stored for Gate 2 sorted out at Gate 2, all other boxes should be sorted in the final basket (sort out all other boxes).".*

Based on the above input, the Language Model Interface can then e.g. provide the following prompt (taking into account e.g. library documentation, requirement documents, etc.) to the Language Model:
"The overall target to achieve is: Sort out boxes of the color stored for Gate 1 at Gate 1, boxes of the color stored for Gate 2 should be sorted out at Gate 2, all other boxes should be sorted in the final basket.

There is a conveyor belt machine which can sort out boxes according to their color
Boxes appear every 10 seconds.

There is Gate 1 where a box can be sorted out, you can configure which color to sort out using OPC UA variable
"gate1_sort_out_color"
There is Gate 2 where a box can be sorted out, you can configure which color to sort out using OPC UA variable
"gate2_sort_out_color"
All boxes that are not sorted out at Gate 1 or Gate 2 are passed to the final basket
You need to figure out the right timing to change variables on the gates
The box color is only known after it has passed gate 1, so you need to periodically get an update via OPC UA about the current box color
You can use the following methods to read and write to OPC UA nodes.
func read_value (node_name)
func write_value (node_name, value)

For the above example, the task specifying section can read as follows and can be appended to the above given prompt:
"Now please perform the Plan Generation step.

Please carefully consider the provided context information.

Please make sure to express the plan by providing detailed instructions on how to use the provided functions.

Please express the plan by referring to the functions, application description, overall requirements, etc. that are described in the context information.

Make sure that your plan provides actual values for target positions, velocity, acceleration, waiting/processing time etc.

The overall output should be in the following format:
THOUGHTS:
REASONING:
PLAN:
CRITICISM:
SPEAK:"

For the above given example, the output generated by the Language Model can be as follows:
"THOUGHTS: To sort the boxes correctly, we need to periodically check the color of each box using OPC UA. Based on the configured color for each gate, we can decide whether to sort the box at Gate 1, Gate 2, or let it pass to the final basket. Timing is crucial in changing the variables on the gates to ensure accurate sorting.
REASONING: By periodically checking the box color using OPC UA, we can make informed decisions on sorting based on the configured color for each gate. This allows us to efficiently sort the boxes without any manual intervention.
PLAN:
   Set up a loop to continuously monitor the appearance of new boxes every 10 seconds.

Within the loop, call the read_value method to get the value of the OPC UA variable "gate1_sort_out_color". Store this value in a variable.

Call the read_value method again to get the value of the OPC UA variable "gate2_sort_out_color". Store this value in a separate variable.

Call the read_value method to get the current box color.

Compare the current box color with the value of
"gate1_sort_out_color". If they match, proceed to step 6. Otherwise, go to step 8.

Call the write_value method to set the OPC UA variable for Gate 1 to indicate that the box should be sorted out.

Continue to the next iteration of the loop.

Compare the current box color with the value of
"gate2_sort_out_color". If they match, proceed to step 9. Otherwise, go to step 11.

Call the write_value method to set the OPC UA variable for Gate 2 to indicate that the box should be sorted out.

Continue to the next iteration of the loop.

The box has not matched any configured colors for sorting. Let it pass to the final basket.

Continue to the next iteration of the loop.

CRITICISM: This plan assumes that the OPC UA variables for gate sorting are being updated correctly and that the box color can be reliably obtained through OPC UA. It's important to ensure that the OPC UA communication is stable and that the variables are being updated as expected.

SPEAK: To sort the boxes, we will continuously monitor the appearance of new boxes every 10 seconds. Using OPC UA, we will read the values of the variables "gate1_sort_out_color" and "gate2_sort_out_color". Then, we will periodically read the current box color. If the box color matches the configured color for Gate 1, we will write the corresponding value to the OPC UA variable for Gate 1. If it matches the configured color for Gate 2, we will write the corresponding value to the OPC UA variable for Gate 2. If the box color does not match any configured colors, we will let the box pass to the final basket."

From the above, the Language Model Interface can provide the control unit with a sequence of function calls and/or programming code, represented as PseudoCode below:

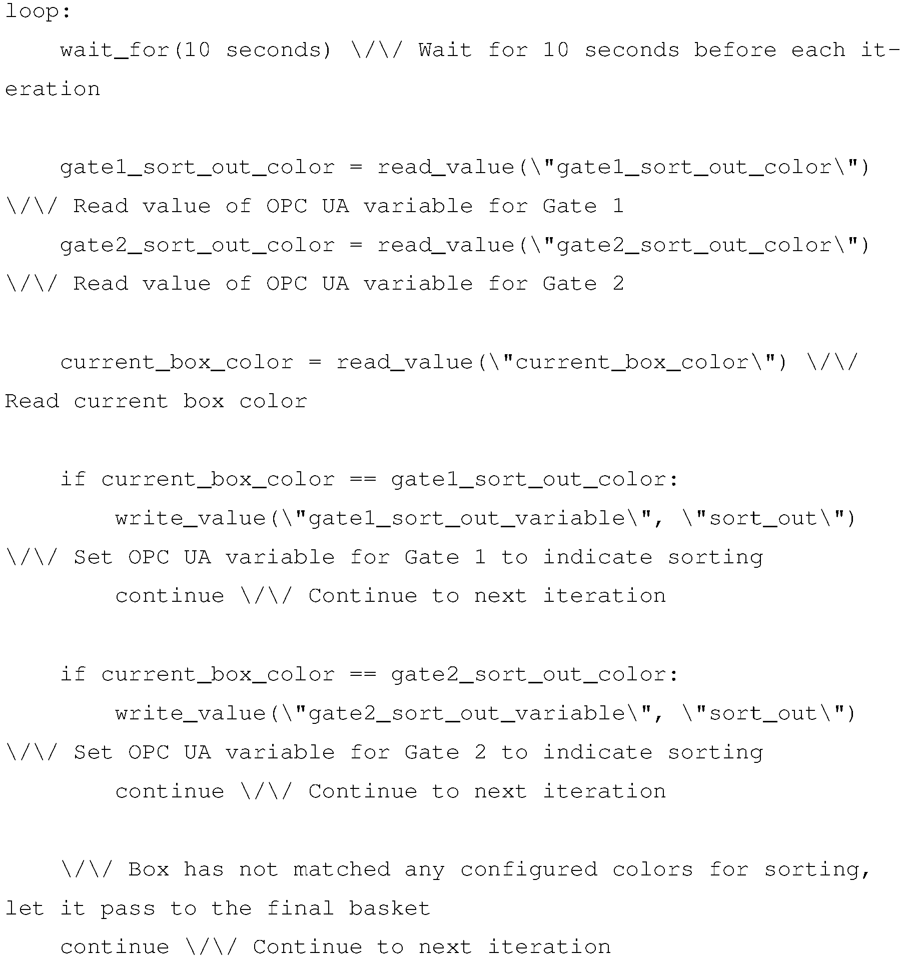

According to a further embodiment the Context Information Library stores
- a description of the actuator and/or sensor, preferably of all actuators and/or sensors of the industrial machine,
- a description of the mechanics and/or electrics of the industrial machine,
- a spatial description of at least parts of the industrial machine,
- a graphical representation of at least parts of the industrial machine, and/or
- library functions that can be carried out by the control unit.

The description of the actuator and/or sensor, as well as description of the mechanics and the spatial description is shown in the above example of the multicarrier application. The actuator can also be termed as actor.

According to a further embodiment, the graphical representation of at least parts of the industrial machine can comprise a picture and/or CAD data of the industrial machine. Another artificial intelligence can be used to translate the picture and/or CAD data into a textual description in human language which can then be provided to the Language Model.

According to a further embodiment the Context Information Library is updated during the operation of the industrial machine. The Context Information Library can thereby reflect the current state, e.g. by including current sensor values. The information comprised in the Context Information Library can be provided to the Language Model after an update of the Context Information Library. The information in the Context Information Library can periodically and repeatedly be provided to the Language Model. Thereby, the Language Model can receive feedback from the industrial machine. The Language Model can then send new and/or updated commands to be executed by the industrial machine to the Language Model Interface. In this manner, dynamic adjustments can be provided by the Language Model. The dynamic adjustments can again comprise commands to be executed by the industrial machine which are sent from the Language Model to the Language Model Interface. The dynamic adjustments/new commands can also be in human language and can then be translated by the Language Model Interface into machine commands for the control unit.

In accordance with a further embodiment, the Context Information Library is updated during the operation of the industrial machine with an error message of the industrial machine. The error message can preferably be in human language. The error message would usually be shown to an operator of the industrial machine. Instead of or additional to showing the error message to a human operator, the error message is stored in the Context Information Library and is thereby made accessible for the Language Model and/or is transferred to the Language Model.

According to a further embodiment the Language Model receives the error message and provides commands to remediate the error. For example, if the error message indicates that a motor is stuck, the Language Model can then provide commands in human language that the motor should be switched off or that the motor should be operated in reverse direction.

In accordance with a further embodiment, for providing commands to remediate the error, the Language Model receives at least extracts of an online help of the industrial machine, of support cases of the industrial machine and/or of technical publications, preferably on the industrial machine. The additional information of the online help, of support cases and/or the technical publications can also be stored in the Context Information Library. The Language Model Interface can then perform a semantic search in this additional information which is based on the error message and can then provide the Language Model with the data found during the semantic search. Thereby, only relevant data for the specific error can be found.

For example, in case of the stock motor, the support cases may indicate that in previous similar cases it was helpful to activate a neighboring motor. The

Language Model can then output commands to be executed by the industrial machine that lead the industrial machine to activate that neighboring motor. Thereby, again, the problem-solving capabilities and context understanding of the Language Model can be leveraged to automatically resolve errors in the industrial machine, preferably based on previous similar errors.

In accordance with a further embodiment the industrial machine comprises at least two conveyor belts that are preferably arranged such that objects transported on one conveyor belt can be moved onto the other conveyor belt. Alternatively, or additionally, the industrial machine can comprise a multicarrier having a continuous track on which plurality of carriers can be moved independently. The carriers can be moved by linear motors which form the track. The track can form a closed loop. The carriers can be used to transport goods.

In another aspect, the invention also relates to an industrial machine comprising a control unit, e.g. a PLC, and at least one actuator and/or sensor which is controlled by the control unit, wherein the industrial machine comprises a supervising unit, the supervising unit is adapted to
- provide a Language Model,
- provide a Language Model Interface,
- provide a Context Information Library, which stores information on the industrial machine, particularly commands executable by the industrial machine,
wherein
- the Language Model Interface is adapted to provide information on the industrial machine from the Context Information Library to the Large Language Model,
- the Language Model is adapted to send commands to be executed by the industrial machine to the Language Model Interface,
- Language Model Interface is adapted to translate the commands received from the Language Model into machine commands for the control unit.

The disclosure comprised herein with respect to the inventive method also applies to the inventive industrial machine. This particularly applies to the embodiments disclosed with respect to the inventive method. It is further noted that the features disclosed herein can also be combined with each other if the contrary is not explicitly stated.

Various features and advantages of the present invention will become more apparent from the following exemplary description and examples shown in the accompanying drawings, wherein:
**Figure 1** schematically shows the Language Model, the Language Model Interface and the control unit;
**Figure 2** shows a first example of an industrial machine, namely a conveyor belt system;
**Figure 3** shows a second example of the industrial machine, namely a multicarrier system.

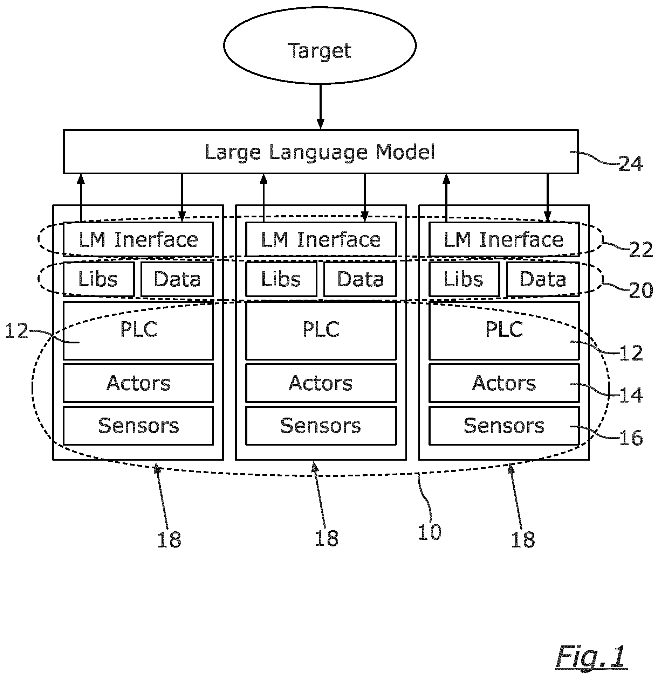

Figure 1 shows a schematic of an industrial machine 10 comprising a control unit comprised of three PLCs 12, as well as actors 14 and sensors 16 connected to each PLC 12.

The industrial machine 10 is thereby divided into three modules 18 for each module 18 a Context Information Library 20 is present which includes library information ("Libs") and current status data ("Data") of the respective module 18 of the industrial machine 10.

A Language Model Interface 22 is connected with the PLCs 12 of each module 18. The Language Model Interface 22 is in communication connection with a Language Model, in this example in the form of a Large Language Model 24.

During operation of the industrial machine 10, the Large Language Model 24 receives a task and/or requirement to be fulfilled ("Target"). The Target may be set by a human operator of the industrial machine. The Target is then supplemented by the Language Model Interface 22 with information from the Context Information Library 20. The information given to the Large Language Model 24 is in human language and comprises information on the spatial and functional set up of the industrial machine and the structure on how the industrial machine can be controlled using e.g. library functions of the PLCs 12.

From this information, the Large Language Model 24 generates a plan to achieve the target by using the library functions which were exposed by the Language Model Interface 22.

The plan generated by the Large Language Model 24 may be in human language and can be translated by the Language Model Interface 22 into commands for the PLCs 12 so that the PLCs 12 can control the actors and correctly process the sensor data in order to operate the industrial machine 10 as desired by the plan generated by the Large Language Model 24. Each PLC 12 can only receive the commands relevant for itself and the actors/sensors 14, 16 it is connected to.

Figure 2 shows a first example of an industrial machine 10. The example of Figure 2 shows a conveyor belt system comprising of a plurality of conveyor belts 26. The conveyor belt system comprises two scanning portals 28, i.e. sensors 16. The conveyor belts 26 are actors 14. The conveyor belt system comprises two input belts 30 and three output belts 32.

The task given to the Large Language Model 24 could then be to *"Sort packages below a height of 10 cm to the first output belt, packages with a height of 10 cm to 30 cm to the second output belt and to sort higher packages to the third output belt 32'.*

As information from the Context Information Library, the Large Language Model could then receive the setup and arrangement of the different conveyor belts and the setup and placement of the scanning portals 28. Also, the picture shown in Figure 2 could be translated into a human language description using a correspondingly adapted artificial intelligence.

The Large Language Model 24 would then provide a plan of how the belts and scanning portals 26, 28 should be operated to achieve the desired target.

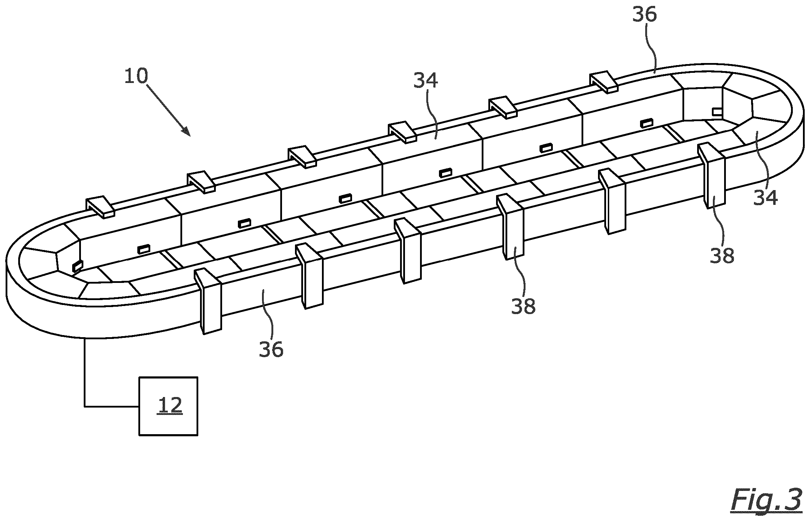

Figure 3 shows another example of the industrial machine, namely a multicarrier system. The multicarrier system comprises a number of linear motors that together form a continuous track. On the track a number of carriers 38 can be moved independently from each other by the linear motors 34, i.e. the actors 14. The position of the carriers 38 is determined by position sensors.

As described in more detail above, the target for the multicarrier system could be to perform a tube filling application in an efficient manner. The Large Language Model 24 could then provide the plan as shown exemplary above, wherein the PLCs 12 could then execute the plan after it has been translated by the Language Model Interface 22.

By using human language to request the Large Language Model 24 to provide a plan for the operation of the industrial machine 10, the time-consuming engineering and programming of PLCs can be omitted. Due to providing the information from the Context Information Library 20 it is additionally possible to use off-the-shelf Language Models that do not have to be specifically trained for the operation of a specific industrial machine 10.

### List of reference signs

10 industrial machine
12 PLC
14 actor
16 sensor
18 module
20 Context Information Library
22 Language Model Interface
24 Large Language Model
26 conveyor belt
28 scanning portal
30 input belt
32 output belt
34 linear motor
36 track
38 carrier

## Claims

1. A method of controlling an industrial machine (10), the industrial machine (10) comprising a control unit (12), e.g. a PLC, and at least one actuator (14) and/or sensor (16) which is controlled by the control unit (12), wherein
- a Language Model (24) is provided,
- a Language Model Interface (22) is provided,
- a Context Information Library (20) is provided, which stores information on the industrial machine (10), particularly commands executable by the industrial machine (10),
wherein
- the Language Model Interface (22) provides information on the industrial machine (10) from the Context Information Library (20) to the Language Model (24),
- the Language Model (24) sends commands to be executed by the industrial machine (10) to the Language Model Interface (22),
- the Language Model Interface (22) translates the commands received from the Language Model (24) into machine commands for the control unit (12).

2. The method of claim 1,
wherein the Language Model (24) and the Language Model Interface (22) exchange information in human language.

3. The method of claim 1 or 2,
wherein the Language Model (24) comprises a Large Language Model, particularly a publicly available Large Language Model, wherein the Large Language Model preferably is adapted for contextual understanding and/or comprises knowledge representation capabilities.

4. The method of at least one of the preceding claims,
wherein the Language Model (24) receives an input from an operator, the input comprising a task and/or requirement to be fulfilled by the industrial machine (10), wherein the input is preferably in human language.

5. The method of at least one of the preceding claims,
wherein the input from the operator is supplemented by including information on the industrial machine (10) from the Context Information Library (20), wherein preferably, when supplementing the input from the operator, a set of functions executable by the control unit (12) is presented to the Language Model.

6. The method of at least one of the preceding claims,
wherein the Language Model Interface (22) and the control unit (12) communicate using OPC UA.

7. The method of at least one of the preceding claims,
wherein for translating the commands received from the Language Model (24), the Language Model Interface (22) extracts functions executable by the control unit (12) from the received commands.

8. The method of claim 7,
wherein extracting functions executable by the control unit (12) comprises at least one of the following:
- Tokenization,
- Part-of-Speech Tagging,
- Named Entity Recognition,
- Syntax Parsing,
- Lemmatization,
- Sequence Alignment,
- Information Extraction,
- Language Generation,
- Error Handling.

9. The method of at least one of the preceding claims,
wherein the Context Information Library (20) stores
- a description of the actuator and/or sensor,
- a description of the mechanics of the industrial machine (10),
- a spatial description of at least parts of the industrial machine (10),
- a graphical representation of at least parts of the industrial machine (10),
- library functions that can be carried out by the control unit (12).

10. The method of at least one of the preceding claims,
wherein the Context Information Library (20) is updated during the operation of the industrial machine (10).

11. The method of at least one of the preceding claims,
wherein the Context Information Library (20) is updated during the operation of the industrial machine (10) with an error message of the industrial machine (10).

12. The method of claim 11,
wherein the Language Model (24) receives the error message and provides commands to remediate the error.

13. The method of claim 12,
wherein for providing commands to remediate the error, the Language Model (24) receives at least extracts of an online help of the industrial machine (10), of support cases of the industrial machine (10) and/or of technical publications, preferably on the industrial machine (10).

14. The method of at least one of the preceding claims,
wherein the industrial machine (10) comprises at least two conveyor belts (26) and/or wherein the industrial machine (10) comprises a multicarrier having a continuous track (36) on which a plurality of carriers (38) can be moved independently.

15. Industrial machine comprising a control unit (12), e.g. a PLC, and at least one actuator (14) and/or sensor (16) which is controlled by the control unit (12), wherein the industrial machine (10) comprises a supervising unit, the supervising unit being adapted to
- provide a Language Model (24),
- provide a Language Model Interface (22),
- provide a Context Information Library (20), which stores information on the industrial machine (10), particularly commands executable by the industrial machine (10),
wherein
- the Language Model Interface (22) is adapted to provide information on the industrial machine (10) from the Context Information Library (20) to the Language Model (24),
- the Language Model (24) is adapted to send commands to be executed by the industrial machine (10) to the Language Model Interface (22),
- the Language Model Interface (22) is adapted to translate the commands received from the Language Model (24) into machine commands for the control unit (12).

## Amended claims

### Amended claims in accordance with Rule 137(2) EPC.

1. A method of controlling an industrial machine (10), the industrial machine (10) comprising a control unit (12), e.g. a PLC, and at least one actuator (14) and/or sensor (16) which is controlled by the control unit (12), wherein
- a Language Model (24) is provided,
- a Language Model Interface (22) is provided,
- a Context Information Library (20) is provided, which stores information on the industrial machine (10), particularly commands executable by the industrial machine (10),
wherein
- the Language Model Interface (22) provides information on the industrial machine (10) from the Context Information Library (20) to the Language Model (24),
- the Language Model (24) uses the information on the industrial machine (10) from the Context Information Library (20) provided by the Language Model Interface (22) to provide commands to be executed by the industrial machine (10) and sends the commands to be executed by the industrial machine (10) to the Language Model Interface (22),
- the Language Model Interface (22) translates the commands received from the Language Model (24) into machine commands for the control unit (12),
wherein the Language Model (24) and the Language Model Interface (22) exchange information in human language.

2. The method of claim 1,
wherein the Language Model (24) comprises a Large Language Model, particularly a publicly available Large Language Model, wherein the Large Language Model preferably is adapted for contextual understanding and/or comprises knowledge representation capabilities.

3. The method ofclaim1 or 2,
wherein the Language Model (24) receives an input from an operator, the input comprising a task and/or requirement to be fulfilled by the industrial machine (10), wherein the input is preferably in human language.

4. The method of at least one of the preceding claims,
wherein the input from the operator is supplemented by including information on the industrial machine (10) from the Context Information Library (20), wherein preferably, when supplementing the input from the operator, a set of functions executable by the control unit (12) is presented to the Language Model.

5. The method of at least one of the preceding claims,
wherein the Language Model Interface (22) and the control unit (12) communicate using OPC UA.

6. The method of at least one of the preceding claims,
wherein for translating the commands received from the Language Model (24), the Language Model Interface (22) extracts functions executable by the control unit (12) from the received commands.

7. The method of claim 6,
wherein extracting functions executable by the control unit (12) comprises at least one of the following:
- Tokenization,
- Part-of-Speech Tagging,
- Named Entity Recognition,
- Syntax Parsing,
- Lemmatization,
- Sequence Alignment,
- Information Extraction,
- Language Generation,
- Error Handling.

8. The method of at least one of the preceding claims,
wherein the Context Information Library (20) stores
- a description of the actuator and/or sensor,
- a description of the mechanics of the industrial machine (10),
- a spatial description of at least parts of the industrial machine (10),
- a graphical representation of at least parts of the industrial machine (10),
- library functions that can be carried out by the control unit (12).

9. The method of at least one of the preceding claims,
wherein the Context Information Library (20) is updated during the operation of the industrial machine (10).

10. The method of at least one of the preceding claims,
wherein the Context Information Library (20) is updated during the operation of the industrial machine (10) with an error message of the industrial machine (10).

11. The method of claim 10,
wherein the Language Model (24) receives the error message and provides commands to remediate the error.

12. The method of claim 11,
wherein for providing commands to remediate the error, the Language Model (24) receives at least extracts of an online help of the industrial machine (10), of support cases of the industrial machine (10) and/or of technical publications, preferably on the industrial machine (10).

13. The method of at least one of the preceding claims,
wherein the industrial machine (10) comprises at least two conveyor belts (26) and/or wherein the industrial machine (10) comprises a multicarrier having a continuous track (36) on which a plurality of carriers (38) can be moved independently.

14. Industrial machine comprising a control unit (12), e.g. a PLC, and at least one actuator (14) and/or sensor (16) which is controlled by the control unit (12), wherein the industrial machine (10) comprises a supervising unit, the supervising unit being adapted to
- provide a Language Model (24),
- provide a Language Model Interface (22),
- provide a Context Information Library (20), which stores information on the industrial machine (10), particularly commands executable by the industrial machine (10),
wherein
- the Language Model Interface (22) is adapted to provide information on the industrial machine (10) from the Context Information Library (20) to the Language Model (24),
- the Language Model (24) is adapted to use the information on the industrial machine (10) from the Context Information Library (20) provided by the Language Model Interface (22) to provide commands to be executed by the industrial machine (10) and to send the commands to be executed by the industrial machine (10) to the Language Model Interface (22),
- the Language Model Interface (22) is adapted to translate the commands received from the Language Model (24) into machine commands for the control unit (12),
wherein the Language Model (24) and the Language Model Interface (22) exchange information in human language.
